# EUROPEAN PATENT SPECIFICATION

(11) **EP 0 917 756 B1**
(45) Date of publication and mention of the grant of the patent: **22.10.2003**
(21) Application number: 97934661.6
(22) Date of filing: 05.08.1997
(51) Int. Cl.: H02K 15/03, H02K 1/27

(54) **ROTARY ELECTRICAL MACHINES**
ELEKTRISCHE DREHMASCHINE
MACHINES ELECTRIQUES ROTATIVES

(30) Priority: 07.08.1996 GB 9616602
(43) Date of publication of application: 26.05.1999
(73) Proprietor: The Turbo Genset Company Limited, Middlesex UB7 0LJ (GB)
(72) Inventor: PULLEN, Keith, Robert, London W3 9JW (GB); FENOCCHI, Arnold, London SW20 8HU (GB); HALL, Justin, Arthur, Surrey KT2 7HZ (GB); ETEMAD, Mohammad, Reza, London SW14 8NY (GB)
(74) Representative: Midgley, Jonathan Lee
(86) International application number: GB9702117
(87) International publication number: WO98006165

(56) References cited:
- EP-A- 0 353 042
- FR-A- 2 632 788
- GB-A- 2 299 217
- US-A- 4 918 802

## Description

The present invention relates to a rotor for a rotary electrical machine such as an electrical generator or electric motor.

British Patent Specification GB 2 222 031 A describes an axial field electrical generator capable of operation at very high speeds. This document describes an axial field electrical generator having a disc rotor with a ring of permanent magnet segments equiangularly spaced around a hub. Engagement with the hub is maintained by means of a pre-stressed hoop. The hoop is formed initially as a push fit and stressed during assembly by expanding the hub by forcing into it, an oversize boss.

US-4,918,802 describes a system for applying a plurality of permanent magnet segments and an outer sleeve or cylinder onto the laminations of a rotating electric machine. This involves mounting the permanent magnet section and sleeve assembly onto a mandrel which is then driven up a tapered shaft so as to expand the magnet sections before they are driven off the mandrel and onto the laminations.

According to the present invention there is provided a method of applying a retention ring to a disc rotor assembly comprising a plurality of substantially equiangularly spaced magnets, characterized by the method comprising mounting the retention ring on a slidable support means and expanding the retention ring by driving the retention ring and support means over a tapered mandrel and onto a rim of the rotor assembly.

The complete rotor assembly may be used in any kind of electrical machine which utilizes a disc-type rotor, for example as described in GB 2 222 031 A or in the applicants' co-pending UK patent application No. 9123576.2 (GB 2 261 327 A). In such machines, usually a plurality of the rotors are spaced apart along a drive shaft, interspersed by thin annular stators.

Prior to fitment of the retention ring, it is preferred for the magnet to be maintained in position on a hub of the rotor by a temporary retention means, for example a temporary holding ring located over the rim of the rotor. It is also preferred to provide a second (outer) containment ring slidably located over the temporary holding ring, outside the tapered mandrel by means of push fit. When the retention ring is driven over the mandrel, the retention ring can then displace the outer containment ring so that the retention ring grips the temporary holding ring, and hence the rim of the rotor, through the mandrel by means of interference fit.

The slidable support means, is preferably a slidable support ring.

After assembly, the temporary retention ring and slidable support ring can be machined smooth so that they do not obstruct the rotor in use.

The slidable support ring is preferably rested on a driver means such as a hollow driver cup partially surrounding the mandrel. Normally, the ring and driver means is acted upon by one part of a ram, for example mechanical or hydraulic, and a second part of the ram acts on the mandrel.

The present invention will now be explained in more detail by the following non-limiting description of a preferred embodiment and with reference to the accompanying drawings, in which:
Figure 1 shows a tapered mandrel arrangement for effecting a method of fitting a retention ring in accordance with the present invention;
Figure 2 shows the arrangement of Figure 1 with the retention ring over the rotor prior to removal from the mandrel.

As shown in the drawings, a retention ring 1, preferably wound from carbon fibres, is to be fitted over a disc rotor 3 having a rim 5. The rotor comprises a plurality of substantially equi-angularly spaced magnets fitted on a spider 9.

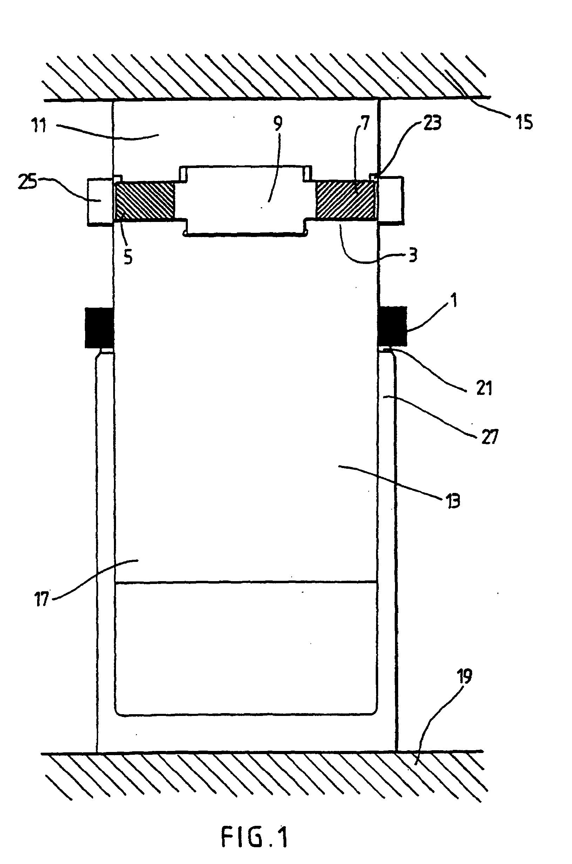

Referring now to Figure 1, prior to assembly the rotor is located within an upper (wider) part 11 of a tapered mandrel 13. The upper part of the mandrel is in contact with one half 15 of a mechanical or hydraulic ram operated press. A lower (narrower) part 17 of the mandrel faces a second half 19 of the ram, spaced apart therefrom.

The retention ring 1 is supported concentrically on the mandrel 13 by means of a slidable concentric metal support ring 21 over which it is located by means of a push fit. Initially, the retention ring and support ring are a loose fit over the mandrel, approximately two thirds down the length thereof. The magnets of the rotor are held on the spider 9 by means of a temporary holding inner metal ring 23 also concentric with the mandrel. A containment ring 25 outside the mandrel surrounds the inner ring 23 and the rim 5 of the rotor. The containment ring 25 prevents the inner ring 23 from buckling as the retention ring and support ring are driven over it, as described below.

The support ring 21 is supported by a hollow driver cup 27 surrounding the lower part 17 of the mandrel. The base 29 of the driver cup is in direct contact with the second half 19 of the ram.

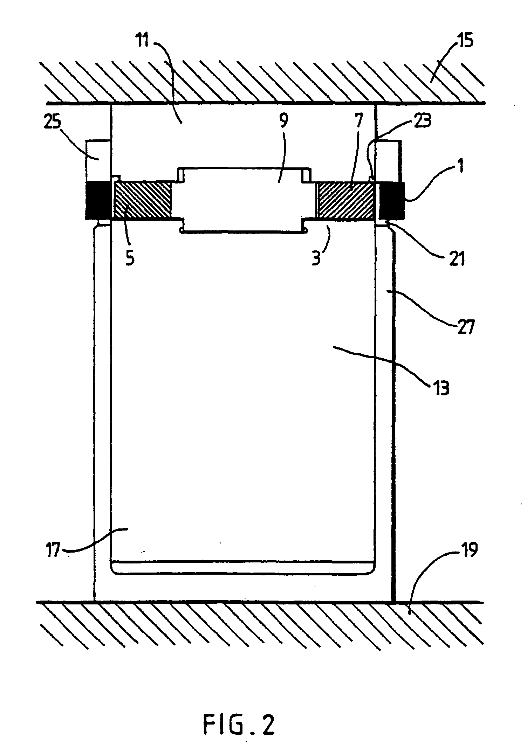

As shown in Figure 2, actuation of the ram to bring the two halves 15, 19 of the ram closer together causes the support ring 21 and with it the retention ring 1, to travel over the mandrel 14 towards the wider part 11 until the containment ring is upwardly displaced. The containment ring is dimensioned to slide freely over the wider part 11 in order not to impede positioning of the retainment ring 1 over the rim 5. The retention ring 1 and support ring 21 then grip the inner ring and rim 5 of the rotor through the mandrel.

The assembled rotor is then cut free of the mandrel and support ring 21 and inner ring 23 are machined down prior to assembly of the rotor into an electrical machine so that the rotor does not have protrusions which would interfere with the stator(s) thereof.

In the light of this disclosure, modifications of the described embodiment, as well as other embodiments, all within the scope of the present invention as defined by the appended claims, will now become apparent to persons skilled in the art.

## Claims

1. A method of applying a retention ring (1) to a disc rotor assembly (3) comprising a plurality of substantially equiangularly spaced magnets (7), **characterized by** the method comprising mounting the retention ring on a slidable support means (21) and expanding the retention ring by driving the retention ring and support means (21) over a tapered mandrel (17) and onto a rim (5) of the rotor assembly.

2. A method according to claim 1, wherein the magnets are maintained in position on a hub of the rotor prior to fitment of the retention ring by temporary retention means (23, 25).

3. A method according to claim 2, wherein the temporary retention means comprises a temporary holding ring (23) located over the rim of the rotor and an outer containment ring (25) slidably located over the temporary holding ring.

4. A method according to claim 3, wherein the retention ring displaces the outer containment ring so that the retention ring grips the temporary holding ring by interference fit

5. A method according to any one of claims 1 to 4, wherein the slidable support means is a slidable support ring.

6. A method according to claim 5, wherein the slidable support ring is driven over the rotor to be trapped between the rotor rim and the retention ring.

7. A method according to claim 5, when dependent on claim 3, wherein after assembly, the rotor is removed from the mandrel and the temporary holding ring and slidable support ring are machined smooth.

8. A method according to any preceding claim, wherein the retention ring is driven over the tapered mandrel by ram means (19).

9. A method according to claim 8, wherein the retention ring is connected to the ram means by driver means (29).

10. A method according to claim 9, wherein the driver means is arranged to act on the slidable support means.

11. A method according to claim 8 or claim 9, wherein the ram means is a mechanical or hydraulic ram.

## Patentansprüche

1. Verfahren zum Aufbringen eines Sicherungsrings (1) auf eine Scheibenrotoreinheit (3), die eine Vielzahl von im wesentlichen in gleichen Winkelabständen angeordneten Magneten (7) aufweist, **dadurch gekennzeichnet, daß** das Verfahren das Anbringen des Sicherungsrings auf einem verschiebbaren Tragmittel (21) und das Expendieren des Sicherungsrings durch Treiben des Sicherungsrings und des Tragmittels (21) über einen konischen Dorn (17) und auf einen Rand (5) der Rotoreinheit aufweist.

2. Verfahren gemäß Anspruch 1, wobei die Magnete vor der Anbringung des Sicherungsrings durch temporäre Sicherungsmittel (23, 25) in ihrer Position auf einer Nabe des Rotors gehalten werden.

3. Verfahren gemäß Anspruch 2, wobei die temporären Sicherungsmittel einen temporären Haltering (23) aufweisen, der auf dem Rand des Rotors angeordnet ist, und einen äußeren Einschließungsring (25) aufweisen, der auf dem temporären Haltering verschiebbar angeordnet ist.

4. Verfahren gemäß Anspruch 3, wobei der Sicherungsring den äußeren Einschließungsring so verschiebt, daß der Sicherungsring den temporären Haltering durch einen Preßsitz festhält.

5. Verfahren gemäß irgendeinem der Ansprüche 1 bis 4, wobei das verschiebbare Tragmittel ein verschiebbarer Tragring ist.

6. Verfahren gemäß Anspruch 5, wobei der verschiebbare Tragring über den Rotor getrieben wird, um zwischen dem Rotorrand und dem Sicherungsring eingeschlossen zu werden.

7. Verfahren gemäß Anspruch 5, wenn von Anspruch 3 abhängig, wobei der Rotor nach den Zusammenbau von dem Dorn abgenommen wird, und der temporäre Haltering und der verschiebbare Tragring maschinell glatt bearbeitet werden.

8. Verfahren gemäß irgendeinem vorhergehenden Anspruch, wobei der Sicherungsring durch ein Rammenmittel (19) über den konischen Dorn getrieben wird.

9. Verfahren gemäß Anspruch 8, wobei der Sicherungsring durch ein Treibermittel (29) mit dem Rammenmittel verbunden wird.

10. Verfahren gemäß Anspruch 9, wobei das Treibermittel ausgelegt ist, um auf das verschiebbare Tragmittel zu wirken.

11. Verfahren gemäß Anspruch 8 oder Anspruch 9, wobei das Rammenmittel eine mechanische oder hydraulische Ramme ist.

## Revendications

1. Procédé d'application d'une bague de retenue (1) à un ensemble rotor à disque (3) comprenant une pluralité d'aimants sensiblement équidistants angulairement (7), **caractérisé par** le procédé comprenant les étapes consistant à monter la bague de retenue sur un moyen de support coulissant (21) et élargir la bague de retenue en entraînant la bague de retenue et le moyen de support (21) par-dessus un mandrin effilé (17) et sur un bord (5) de l'ensemble rotor.

2. Procédé selon la revendication 1, dans lequel les aimants sont maintenus en position sur un moyeu du rotor avant l'emboîtement de la bague de retenue par un moyen de retenue temporaire (23, 25).

3. Procédé selon la revendication 2, dans lequel le moyen de retenue temporaire comprend une bague de maintien temporaire (23) située sur le bord du rotor et une bague de confinement extérieure (25) positionnée de façon coulissante par-dessus la bague de maintien temporaire.

4. Procédé selon la revendication 3, dans lequel la bague de retenue déplace la bague de confinement extérieure de sorte que la bague de retenue serre la bague de maintien temporaire par ajustement serré.

5. Procédé selon l'une quelconque des revendications 1 à 4, dans lequel le moyen de support coulissant est une bague de support coulissante.

6. Procédé selon la revendication 5, dans lequel la bague de support coulissante est entraînée par-dessus le rotor pour être coincée entre le bord de rotor et la bague de retenue.

7. Procédé selon la revendication 5, lorsqu'elle dépend de la revendication 3, dans lequel après montage, le rotor est retiré du mandrin et la bague de maintien temporaire ainsi que la bague de support coulissante sont usinées lisses.

8. Procédé selon l'une quelconque des revendications précédentes, dans lequel la bague de retenue est entraînée par-dessus le mandrin effilé par un moyen à vérin (19).

9. Procédé selon la revendication 8, dans lequel la bague de retenue est raccordée au moyen à vérin par un moyen d'entraînement (29).

10. Procédé selon la revendication 9, dans lequel le moyen d'entraînement est configuré pour agir sur le moyen de support coulissant.

11. Procédé selon la revendication 8 ou la revendication 9, dans lequel le moyen à vérin est un vérin mécanique ou hydraulique.
